# EUROPEAN PATENT SPECIFICATION

(11) **EP 0 451 245 B1**
(45) Date of publication and mention of the grant of the patent: **27.07.1994**
(21) Application number: 90916016.0
(22) Date of filing: 31.10.1990
(51) Int. Cl.: B30B 9/06, B30B 9/10, B30B 9/22, A23N 1/00

(54) **MACHINE FOR THE EXTRACTION OF JUICE FROM GRAPES**
MASCHINE ZUM PRESSEN VON TRAUBEN
MACHINE SERVANT A EXTRAIRE LE JUS DES RAISINS

(30) Priority: 02.11.1989 IT 4851589
(43) Date of publication of application: 16.10.1991
(73) Proprietor: VALENTINI, Valentino, I-00128 Roma (IT)
(72) Inventor: VALENTINI, Valentino, I-00128 Roma (IT)
(86) International application number: IT9000089
(87) International publication number: WO9106422

(56) References cited:
- DE-A- 3 039 248
- FR-A- 680 054
- FR-A- 1 204 824
- FR-A- 2 162 415
- FR-A- 2 530 424
- FR-A- 2 582 985
- US-A- 3 232 219
- US-A- 3 705 546
- US-A- 4 788 910

## Description

The present invention relates to a machine that permits the expression of juice from grapes, and the filtering of the extracted juice, in one continuous operation. The preamble of appendant claim 1 is based onto the prior art according to DE-A-3 039 248.

Equipment currently used by wine producers includes horizontal presses known in Italy as sgrondatori or smostatori (in effect "drainers" or "de-musters") which serve in the making of white and rosé wines to separate fresh must from grapes, leaving behind the skins. Many such presses exist, differing in construction and operation but falling essentially into two main categories, namely non-continuous and continuous. A non-continuous type of press appears as a horizontally disposed cylindrical vessel into which stemmed and crushed grapes are introduced and then compressed mechanically, hydraulically or pneumatically in order to extract the juice, which flows either to a trough located externally of the cylinder or into cavities formed in the cylinder itself. With extraction accomplished, compression ceases and the skins are removed. The continuous press is a machine installed between the initial crusher and a conventional press, which permits the removal of the skins without any substantial pause during operation, the crushed grapes being pressed sufficiently to bring about a swift separation of the fresh juice, whereupon the skins are ejected.

Presses of the types outlined above betray certain drawbacks, among which, for example, is the length of time taken for the juice to emerge; this may be due to the bulk of the advancing mass of grapes, or to the fact that the force of compression applied is either excessive or at any rate uneven, or again to abrasion of the skins and the consequent build-up of solid matter. Whether as a result of lengthy percolation or of an uneven pressing force, the wine-making operation is adversely affected.

At all events, the fresh must expressed by means of such machinery requires filtration; this is a step that needs to be effected prior to fermentation, as recent experience has shown that the fermentation process requires as clean a juice as possible if the wine is ultimately to possess the best obtainable scent, taste and other organoleptic properties, and resist deterioration. the greater the force applied to the skins, the greater will be the filtration requirement; by the same token, the filtering step must be completed in the shortest time possible.

As the conventional presses in question incorporate no means of filtration, the fresh juice has to be directed as swiftly as possible into pressure or vacuum filters of notably large proportions, which consume commensurately notable quantities of fossil flour, or into costly centrifugal separators.

Accordingly, the object of the present invention is to provide a machine for the extraction of juice from grapes which, while operating continuously, is able to overcome the drawbacks mentioned above.

This invention for the extraction of juice from grapes refers to systems of compression already in existence such as that described in the copyright DE 3039248 A1, (in fact, never realized because the filtering operations of the must into compression chambers with a fixed bottom, of any type whatsoever, cause a rapid blockage of the filtering layer with the consequent necessity for continuous interruptions for washing and cleaning operations. Furthermore, the advance of the grapes between a fixed filtering layer and a pressing surface involves a pushing device that must be very strong, and above all friction from the movement of the grapes that will produce a must of very poor quality).

On the contrary, the achievement of continuity of operation, even for large hourly volumes (40-50 tons of grapes per hour) with a product of very high quality and a relatively modest pushing force, has been obtained, in the stated object, by inserting, in the lower part of the compression chamber, rotating filtering belts which as well as moving the grapes forward, during the inactive part of their circuit, can at the same time be continuously cleaned.

Contemporaneously, in order to eliminate the friction of the grapes in movement and to further better the quality of the juice by decreasing the amount of power required for driving the feeding ram, on the upper part of the compression chamber in the invention a sheet of very smooth flexible material has been applied to the upper pressing surface. This sheet is very well lubrificated by the juice in extraction.

This flexible sheet, moreover, in the case of the compression element being represented by the foreseen inflatable cushions, also acts as protection for the inflatable cushion or cushions, permitting them to be always inflated and therefore in active pressure on the moving grapes. Every other attempt, in fact, meant pressing the grapes while they were immobile, and the intermittent deflation of the cushions to permit the advance of the skins in alternate phases.

The stated object is comprehensively realized in a machine as characterized in the appended claims, which consists in a horizontally elongated hollow structure, exhibiting a substantially rectangular cross section significantly less in height than in width and remaining constant for substantially its entire length, supported by a frame and comprising, in longitudinal succession: pushing means embodied in part as a ram slidably reciprocated internally of and in fluid tight association with the hollow structure at one end; a gravity feed hopper through which crushed grapes pass into an inlet chamber coinciding with the space swept by the sliding ramp; a compression chamber of progressively narrowing longitudinal section terminating at the end of the structure opposite from the pushing means in an opening whose cross section is smaller than the overall cross section of the hollow structure, from which the pressed grape skins are ejected, enclosed and encompassed uppermost by a surface resiliently subject to the action of means by which to apply a predetermined pressure to the mass of skins, and at the bottom by a rigid flat permeable baffle affording passage to the juice; a generously proportioned trough positioned beneath the baffle, and means by which the juice passing through the baffle and into the trough is directed away from the machine.

In operation, the mass of crushed grapes fed in through the hopper is thrust forward by the pushing means to occupy a succession of areas, progressively decreasing in volume, of the compression area.

Advantageously, the machine will further comprise an adhering layer or sheet of flexible material located between the mass of skins and the upper surface of the compression chamber which is resiliently subject to the action of the pressure means, which serves to reduce the friction, and thus prevent wear on the surface, generated by the skins during their forward motion.

The surface resiliently subject to the action of pressure means might be embodied as a rigid panel, pivoted at the end first encountered by the crushed grapes and angled in the longitudinal direction.

Alternatively, the surface may coincide with the underside of a single inflatable cushion anchored uppermost to the compression chamber. In a further variation on this same alternative embodiment, the resilient surface of the compression chamber may be composed of a plurality of distinct, independently inflatable elements arranged in succession within the hollow structure, each one of which exhibiting a cross sectional area greater than that of the preceding element.

The invention is characterized further in that the permeable flat bottom of the hollow structure can be embodied as a moving belt of flexible filtering material carried by a frame and looped around at least two end rollers, at least one power driven, with the generously proportioned collection trough located between the top and bottom branches of the loop, and again comprising means by which the juice percolating into the trough through the moving flat bottom of the compression chamber is directed away from the machine.

The filtration belt consists either in a single layer of one type of material or a sheet combining several layers of different materials, selected to give the desired filtration capability.

The main advantage afforded by the invention, more especially in the second embodiment described, is that the operations of pressing and filtration can be effected substantially in a single step and with one machine only; moreover, the level of filtration achieved will be sufficient by normal standards for fermentation purposes. The pressure applied to the mass of crushed grapes, whether by hydraulic or pneumatic, or by mechanical means, is adjustable according to the type and quality of grape and the results it is wished to achieve. Filtration can be more or less fine depending upon which mesh size is adopted for the permeable belt constituting the bottom of the compression chamber, the selection of which will in turn depend on the hourly output to be obtained.

A further advantage of the machine according to the invention stems from the fact that it consists in a structure through which the distance percolated by the pressed juice is reduced as far as possible thanks to the notable flat cross section of the advancing mass of grapes, i.e. significantly less in height than in width.

Yet another advantage of the machine according to the invention derives from the fact that one wall of the compression chamber is resiliently flexible or resiliently capable of movement, with the result that singularly low and constant levels of extracting pressure can be applied thus permitting the operation of continuous pressing without continuous interruptions of the pressure to allow the grapes to move forward.

This invention will now be described in detail, by way of example with the aid of the accompanying drawings, in which:
- fig 1 is the schematic representation of a machine for the extraction of juice from grapes which machine is not covered however by the appendant claims, viewed in longitudinal section through a central axis;
- fig 2 is the schematic representation of an embodiment of the machine according to the present invention, viewed in longitudinal section through a central axis;
- fig 3 shows the embodiment of the machine according to the present invention in a vertical elevation from the rear, i.e. from the end at which the pressed skins emerge.

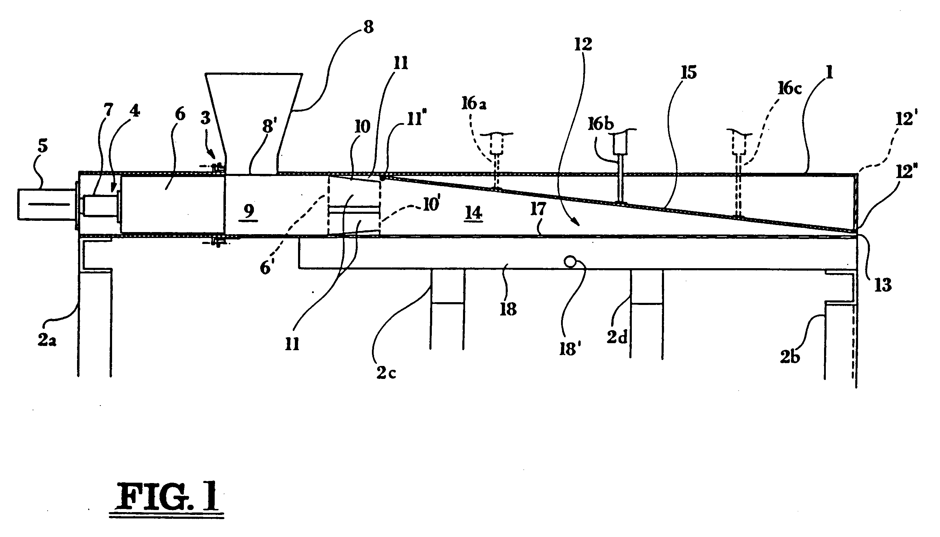

With reference to fig 1 reference sign 1 denotes a hollow, horizontally elongated structure, in its entirety, of which the cross section is shallow, preferably rectangular, and remains substantially constant along the total length of the structure 1. The hollow structure 1 rests on a supporting frame, shown schematically as uprights and cross members 2a-2b and 2c-2d located respectively at the two ends and in intermediate positions, and consists essentially in two parts of which the first, located at one end and associated with the remaining second part by way of peripheral sealing means denoted 3, comprises pushing means 4 embodied for example as a fluid power cylinder 5 mounted externally to the hollow structure 1, and a ram 6, fastened to the rod 7 of the cylinder 5 and reciprocated internally of the hollow structure 1.

The ram 6 exhibits a cross section matched to that of the hollow structure 1, in such a way as enables it to slide in fluid-tight association, i.e. in a close prismatic fit, with the inside of the hollow structure 1.

8 denotes a hopper through the bottom opening of which crushed grapes fall freely into the interior of the hollow structure 1, and more exactly, into an inlet chamber 9 of which the volume is compassed within that swept by the ram 6. When the ram 6 is in the retracted position (bold line in fig 1), the bottom opening of the hopper 8 remains entirely unobstructed, whereas with the ram in the extended position (see phantom line denoted 6'), the bottom opening is blocked (line 8').

10 denotes an expansion chamber positioned forward of the ram 6, in the feed direction, whose function is to accomodate the backward thrust of the mass of grapes driven forward previously by the ram 6. The chamber 10 is defined longitudinally by the phantom line 6' aforementioned and a phantom line parallel thereto denoted 10', and will be seen to afford peripheral projections 11, of which the transverse dimension increases progressively along the feed direction, designed to arrest any backward movement of the mass of skins.

12 denotes a chamber within which the grape skins are compressed, extending from the forward end 10' of the expansion chamber 10 to a transverse plane 12' containing an outlet 13 of cross section smaller than that of the main body of the hollow structure 1, through which the pressed skins are ejected. The compression chamber 12 is encompassed on either side by the flank walls of the hollow structure (denoted 14 in fig 1), and uppermost by a surface denoted 14. In fig 1, this same surface 15 is embodied as a rigid panel hinged about an axis denoted 11' coinciding with the plane 10' between the chambers 10 and 12, angled downwards in the longitudinal direction to terminate on a level with the top of the outlet 13, and capable thus of a limited degree of movement afforded by a slot 12'' coinciding with the transverse plane denoted 12'; accordingly, the compression chamber 12 decreases progressively in cross section from end to end.

The top panel 15 is associated with means by which to apply pressure to the skins, schematically illustrated in fig 1 as fluid power cylinders 16a, 16b and 16c the rods of which are connected to the side of the panel 15 on the opposite side to that of the skins.

In this machine, the bottom of the compression chamber 12 consists in a rigid baffle 17 suitably pierced to allow passage of the separated juice from one side to the other. No further description of such a rigid baffle 17 is offered, given that any suitable screen or drainer panel of conventional embodiment might be adopted.

Juice falls from the compression chamber into a generously proportioned collection trough 18 that will be equipped with means (not illustrated) by which to draw off the liquid through an outlet schematically denoted 18'

Operation of a machine thus embodied will now be described.

Crushed grapes loaded in by way of the hopper 8 are fed through the hollow structure 1 by the pushing means 4, each extension of the ram 6 preferably shutting off the bottom opening of the hopper; as the amassing fruit is thus forced into the tapering compression chamber 12, its tendency to swell back will be suitably checked by the projections 11 of the expansion chamber 10. Inside the compression chamber 12, the skins are subjected to pressure applied resiliently by the rigid panel 15 and its associated means 16a, 16b, 16c, according to the prescribed extraction cycle. The pressed skins are forced from the outlet 13 at the end of the hollow structure 1, whilst the juice percolating through the baffle 17 at the bottom of the chamber 12 and into the trough 18 is directed away to the next step of the process.

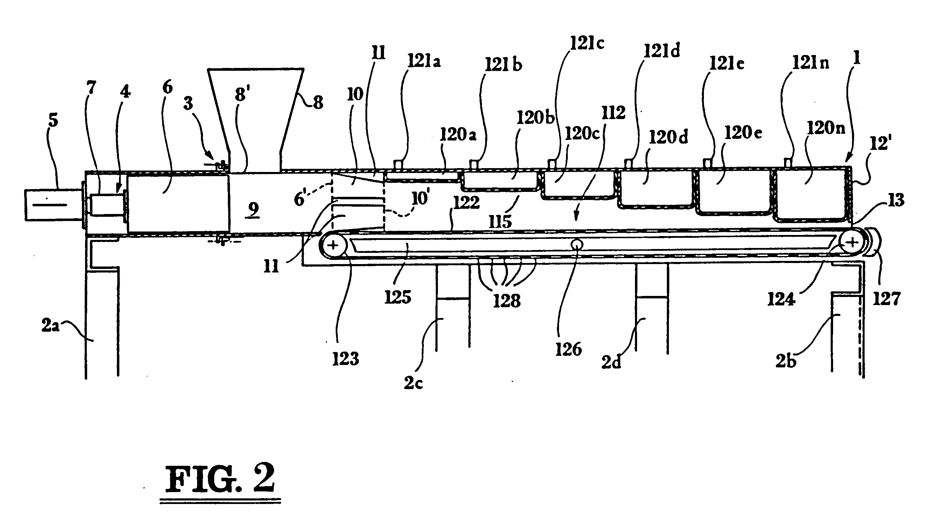

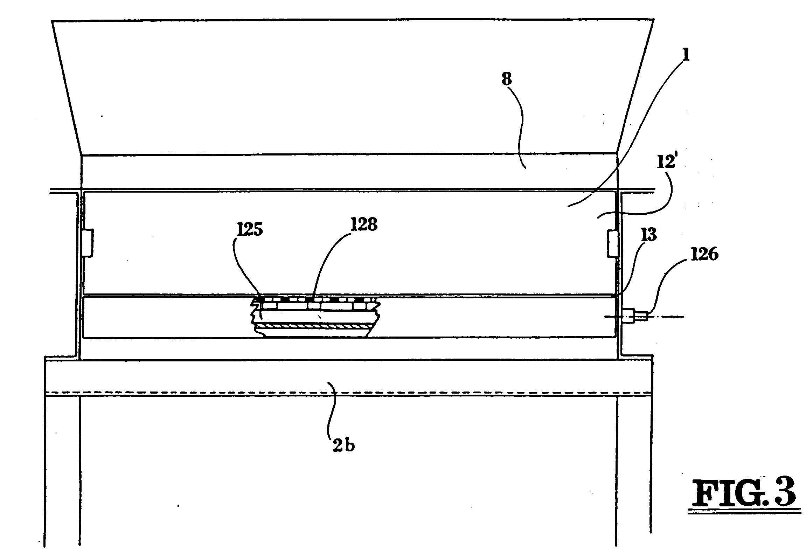

Figs 2 and 3 illustrate an embodiment of the invention. Parts common to the previously described machine are denoted by the same numbers, and warrant no further description.

The differences between this embodiment and the said machine relate principally to the compression chamber, denoted 112.

The uppermost surface 115 of the chamber 112 in this instance, angled likewise between the same two sections 10' and 12', is elastically deformable and coincides with the downwardly directed faces of a plurality of inflatable elements 120a, 120b, 120c, 120d, 120e...120n arranged in succession within the hollow structure 1 and anchored to its uppermost part. Each such inflatable element exhibits a cross section smaller than that of the following element, considered in relation to the path of the advancing mass of grapes.

Means by which to apply pressure to the skins fed longitudinally through the hollow structure consist in a pressurized fluid supplied to and exhausted from the elements 120a...120n by way of respective ports 121a, 121b, 121c, 121e, 121n so as to cause their inflation and deflation.

Pressure on the skins from the inflatable elements making up the top surface 115 of the compression chamber 112 can be applied either uniformly and constantly or, alternatively, applied selectively from one element to another according to the type of extraction cycle required.

The bottom of the compression chamber 112 in this embodiment consists in one branch of a moving belt loop 122 fashioned from a filtering material and passed around at least two transversely disposed end rollers 123 and 124, one of which power driven (e.g. that denoted 124), positioned beneath and coinciding with the two ends of the chamber 112.

The moving belt 122 will be fashioned preferably in a stainless steel mesh of suitable permeability, supported by transverse slats denoted 128 in fig 2. The movement of the belt is timed to coincide with the forward stroke of the ram 6.

125 denotes a collection trough positioned beneath the hollow structure 1, located between the top and bottom branches of the belt loop and encompassing the entire area of the compression chamber 112.

As in the previously described machine, the trough 125 affords an outlet 126 by way of which the juice is directed away from the machine. The filtration belt 122 is provided further with de-encrusting and scraping means abreast of the roller 124 at the outlet end 12' of the hollow structure 1; these means are represented schematically as a brush 127. Washing means will also be installed, serving to clean off the mesh when situated below the collection trough, i.e. on its non-operative return journey; these means (not illustrated in the drawings) might consist in nozzles from which to jet water or other cleansing fluids under pressure, and could be made to operate continuously, given that the operative branch of the belt 122 remains shielded from beneath by the collection trough 125.

The movement of the belt 122 is interlocked to that of the pushing means 4, in such a way as to index with each stroke either through the full length of the top branch or through fractions thereof. Thus one has a succession of alternating movements and pauses, of short duration, programmed in cycles to suit the type of grape and the results required. The crushed grapes in the compression chamber 112 are invested by a steadily applied force from the inflatable elements 120a, b, c, d, e...n, which can be pressurized to pre-calculated and programmed values, whether constant or variable according to the dwell and precise location of the mass of skins in the chamber. Other aspects of operation in this embodiment remain the same as for the first machine described. In both cases, the wedge shape assumed by the mass of crushed grapes in the compression chamber automatically creates a plugging effect, so that the skins cannot emerge until the desired extraction has been achieved.

## Claims

1. A machine for the extraction of juice from grapes consists in a horizontally elongated hollow structure (1), exhibiting a substantially rectangular cross section significantly less in height than in width and remaining constant for substantially its entire length, supported by a frame (2a, b, c, d) and comprising, in longitudinal succession:
- pushing means (4) embodied in part as a ram (6) slidably reciprocated internally of and in fluid tight association with the hollow structure (1) at one end.
- a gravity feed hopper (8) through which crushed grapes pass into an inlet chamber (9) coinciding with the space swept by the sliding ram (6);
- a compression chamber (12 or 112) of progressively narrowing longitudinal section terminating at the end of the structure (1) opposite from the pushing means in an opening (13) whose cross section is smaller than the overall cross section of the hollow structure (1), from which the pressed grape skins are ejected, enclosed and encompassed uppermost by a surface (15 or 115) resiliently subject to the action of means by which to apply a predetermined pressure to the mass of skins, and at bottom by a flat permeable baffle (17) affording passage to the juice characterized in that the baffle at the bottom of the compression chamber is formed as a branch of a moving belt (122) consisting of a flexible and permeable material and supported by a frame (125, 128) and looped around at least two end rollers (123, 124) of which at least one is power driven;
- a generously proportioned trough (125) positioned beneath the top and bottom branches of the looped filtration belt (122), and means by which the juice passing via the moving bottom of the compression chamber into the trough (18) is directed away from the machine; and
in that the mass of crushed grapes fed in through the hopper (8) is thrust forward intermittently by the reciprocating ram (6) to occupy a succession of areas, progressively decreasing in volume, of the compression chamber (12 or 112), and the juice extracted, without any interruption in the extraction, from the skins, in their turn in continuous forward movement on the moving belt, is filtered through the belt (122) itself and collected in the trough (125).

2. A machine as in claim 1, wherein the inlet chamber (9) and the compression chamber (12 or 112) are interconnected by a chamber (10) serving to accomodate the expansion of the mass of skins following the forcing stroke of the ram (6).

3. A machine as in claim 2, wherein the expansion chamber (10) exhibits projections (11) issuing from the walls of the hollow structure (1), increasing in prominence along the feed direction of the machine and serving to prevent the return of the mass of skins.

4. A machine as in claim 1, wherein the pushing means (4) comprises a fluid power cylinder (5).

5. A machine as in claim 1 wherein the passage afforded by the hopper (8) is blocked completely with the ram (6) extended.

6. A machine as in claim 1, wherein the passage afforded by the hopper (8) is blocked in part with the ram (6) extended.

7. A machine as in claim 1, wherein an adhering layer or sheet of flexible material (not illustrated in the drawings) is located between the mass of grape skins and the uppermost surface (15 or 115) of the compression chamber (12 or 112), serving to reduce the friction, and thus prevent wear on the uppermost surface, generated by the advancing skins.

8. A machine as in claim 1, wherein the uppermost surface of the compression chamber (12) is embodied as a rigid angled panel (15), and means by which to apply a predetermined pressure to the mass of skins advancing longitudinally through the interior of the hollow structure (1) consist in one or more fluid power cylinders (16a, b, c).

9. A machine as in claim 8 , wherein pressure applied by the fluid power cylinders (16a,b,c) through the rigid angled panel (15) to the mass of skins occupying the compression chamber (12) remains uniform and constant across the entire panel.

10. A machine as in claim 1, wherein the uppermost surface of the compression chamber coincides with the angled bottom surface of a single inflatable cushion anchored uppermost to the compression chamber.

11. A machine as in claim 1, wherein the uppermost surface (115) of the compression chamber (112) consists in a plurality of distinct, independently inflatable elements (120a, b, c, d, e...n) arranged in succession internally of the hollow structure (1), each exhibiting a cross sectional area greater than that of the preceding element, and means by which to apply a predetermined pressure to the mass of skins consisting in pressurized fluids supplied to each inflatable element.

12. A machine as in claim 11, wherein pressure applied to the mass of skins by way of the inflatable elements is uniform, and remains constant.

13. A machine as in claim 11, wherein pressure applied to the mass of skins by way of the inflatable elements may differ from element to element, while remaining constant.

14. A machine as in claim 1, wherein forward movement of the filtration belt (122) is synchronized with the extending stroke of the ram (6).

15. A machine as in claim 14, wherein forward movement of the filtration belt (122) is synchronized with the extending stroke of the ram (6), and indexed to coincide with the axial length of the compression chamber.

16. A machine as in claim 1, comprising further means (127) by which to de-encrust and scrape the moving filtration belt (122), installed in close proximity to one of the rollers (123, 124).

17. A machine as in claim 1, comprising further means by which to wash the surface of the branch of the looped moving filtration belt (122) which is opposite to the branch that coincides with the bottom of the compression chamber (112).

18. A machine as in claim 1, wherein the moving filtration belt (122) consists in a multilayer sheet composed of different materials combined to give a required permeability.

19. A machine as in claim 18, wherein the layers of filtering material consist in meshes, filter nets and screening fabrics.

## Patentansprüche

1. Eine Maschine für den Extrakt von Traubensaft besteht aus einer horizontal verlängerten Vertiefung (1) mit einem weitgehend rechteckigen Querschnitt, der viel breiter als hoch ist und deren Gesamtlänge im wesentlichen konstant bleibt. Sie wird von einem Rahmen gestützt (2a,b,c,d) und umfasst in längslaufender Reihenfolge:
- Pressvorrichtungen (4), die zum Teil als Presse (6) eingefügt sind und im Innern in beweglicher und enger Verbindung mit der Vertiefung (1) an einem Ende pendeln;
ein Fülltrichter (8), durch den die zerdruckten Trauben in eine Kammer geleitet werden (9). die mit dem Raum übereinstimmt, der von der gleitenden Presse eingenommen wird;
- eine Kompressionskammer ( 12 oder 112 ) mit zunehmend enger werdendem Längsquerschnitt, die am Ende der Struktur (1) gegenüber den Pressvorrichtungen in einer Öffnung endet (13), deren Querschnitt kleiner als der Gesamtquerschnitt der Vertiefung (1) ist. Von dort werden die gepressten Traubenschalen ausgestoßen und werden von oben von einer Fläche eingegrenzt (15 oder 115), die die Bewegung der Vorrichtungen elastisch abfedert und wobei ein bestimmter Druck auf die Traubenschalen ausgeführt wird. Von unten wird sie von einer flachen durchlässigen Sperre umgeben (17), die den Zugang zum Saft erlaubt. Die Sperre am Boden der Kompressionskammer ist ein Teil eines aus einem elastischen und durchlässigen Material bestehenden beweglichen Bandes (122), das von einem Rahmen gestützt wird (125,128) und von mindestens zwei Endlaufrollen umgeben ist, von denen mindestens eine einen Motorantrieb hat;
- eine großzügig proportionierte Rinne (125), die zwischen den oben und unten liegenden Teilen des gewundenen filterungsbandes (122) und den Vorrichtungen liegt, durch die der Saft von der Maschine weggeleitet wird indem er über das bewegliche Band der Kompressionskammer in die Rinne geleitet wird (18); und
da die Menge der zerdrückten Trauben durch den Fülltrichter (8) intermittierend von der Presse vorgeschoben wird (6) und wobei sie langsam an Gewicht verliert den Raum der Kompressionskammer einnimmt (12 oder 112) und der gewonnene Saft , ohne Unterbrechung der Extraktion, von den Schalen, die in ständiger Vorwartsbewegung auf dem beweglichen Band sind, durch das Band selbst gefiltert wird (122) und in der Rinne gesammelt wird (125).

2. Eine Maschine wie bei Anforderung 1, wo die Einlaßkammer (9) und die Kompressionskammer (12 oder 112) durch eine weitere Kammer (10) verbunden sind, die dazu dient die Ausdehnung der Schalenmenge anzugleichen indem sie den Stoß der Presse folgt (6).

3. Eine Maschine wie in Anforderung 2, wobei die Ausdehnungskammer (10) Vorsprünge (11) zeigt, die von den Wänden der Vertiefung (11) herrühren und längs der Füllrichtung der Maschine bedeutend zunehmen und dazu dienen, den Rückfluß der Schalenmengen zu verhindern.

4. Eine Maschine wie in Anforderung 1 wobei die Drückvorrichtung (4) einen beweglichen Stromzylinder enthält (5).

5. Eine Maschine wie in Anforderung 1 wobei der durch den Trichter (8) ermöglichte Zulauf vollständig durch die Presse (6) blockiert ist.

6. Eine Maschine wie in Anforderung 1 wobei der durch den Trichter (8) ermöglichte Zulauf teilweise durch die Presse (6) blockiert ist.

7. Eine Maschine wie in Anforderung 1 wobei eine Schicht oder ein Blatt aus elastischem Material (nicht in den Zeichnungen angegeben) zwischen der Schalenmenge und der höchsten Oberfläche (15 oder 115) der Kompressionskammer (12 oder 112) plaziert ist. Sie dient zur Reibungsverminderung und dies beugt Verschleiß an der höchsten Oberfläche vor, der von den voranrückenden Schalen verursacht wird.

8. Eine Maschine wie in Anforderung 1 wobei die höchste Oberfläche der Kompressionskammer (12) in eine unbiegsame winklige Platte eingelassen ist (15) und die Vorrichtungen durch die ein bestimmter Druck auf die längsseitig in das Innere der Vertiefung vorschreitende Schalenmasse ausgeführt wird (1) bestehen aus ein oder mehreren Stromzylindern (16a, b, c).

9. Eine Maschine wie in Anforderung 8 wobei durch die Stromzylinder (16a,b,c) Druck durch die starre eckige Platte (15) auf die Traubenschalen in der Kompressionskammer (12) ausgeübt wird, der auf der gesamten Platte gleichmäßig und konstant bleibt.

10. Eine Maschine wie in Anforderung 1 wobei die höchste Oberfläche der Kompressionskammer mit der eckigen Bodenfläche eines einzelnen aufblasbaren Puffers zusammenfällt und oben mit der Kompressionskammer verankert ist.

11. Eine Maschine wie in Anforderung 1 wobei die höchste Oberfläche (115) der Kompressionskammer (112) aus einer Vielzahl von verschiedenen, unabhängig voneinander aufpumpbaren Elementen (120a,b,c,d,e,...n), die im Innern der Vertiefung aufeinanderfolgend angeordnet sind, besteht. Jedes Element hat einen größeren Querschnittsraum als der des vorhergehenden Elements und Vorrichtungen, durch die ein bestimmter Druck auf die Schalenmenge ausgeübt wird und aus Flüssigkeiten mit Druckausgleich bestehen, die jedes aufpumpbare Element besitzt.

12. Eine Maschine wie in Anforderung 11 wobei der auf die Schalenmenge ausgeübte Druck durch die aufpumpbaren Elemente gleichmäßig ist und konstant bleibt.

13. Eine Maschine wie in Anforderung 11 wobei der auf die Schalenmenge ausgeübte Druck durch die aufpumpbaren Elemente unterschiedlich von Element zu Element sein kann, aber dennoch konstant bleibt.

14. Eine Maschine wie in Anforderung 1 wobei die Vorwärtsbewegung des Filterungsbandes (122) auf den Stoß der Presse abgestimmt ist (6).

15. Eine Maschine wie in Anforderung 14 wobei die Vorwärtsbewegung des Filterungsbandes (122) auf den Stoß der Presse abgestimmt ist (6) und mit der Axiallänge der Kompressionskammer übereinstimmt.

16. Eine Maschine wie in Anforderung 1 mit weiteren Einrichtungen (127) durch die das bewegliche Filterungsband entkrustet wird (122) und die in der unmittelbaren Nähe einer Rolle eingesetzt sind (123,124).

17. Eine Maschine wie in Anforderung 1 mit weiteren Anlagen zur Oberflächenreinigung des Teiles des beweglichen Filterungsbandes (122), der dem Teil gegenübersteht, der mit dem Boden der Kompressionskammer übereinstimmt (112).

18. Eine Maschine wie in Anforderung 1 wobei das bewegliche Filterungsband (122) aus einem vielschichtigen Blatt aus verschiedenen Materialien besteht um eine erforderliche Durchlässigkeit zu gewahren.

19. Eine Maschine wie in Anforderung 1 wobei die Schichten des Filtermaterials aus Maschen, Filternetzen und schützendem Gewebe besteht.

## Revendications

1. L'appareil servant à extraire le jus des raisins consiste en une structure creuse horizontale (1) présentant une coupe transversale rectangulaire dont la largeur est considérablement plus importante que la hauteur, constante sur pratiquement toute sa longueur, soutenue par une charpente (2a, b, c, d) et comprenant, dans une suite longitudinale:
- des moyens de poussée (4) partiellement réunis dans un pilon coulissant intérieurement dans un mouvement de va-et-vient et en association étanche avec une extrémité de la strucuture creuse (1);
- une trémie d'alimentation par gravité (8) à travers laquelle les raisins pressés passent dans une chambre d'arrivée (9) qui coincide avec l'espace parcouru par le pilon coulissant (6);
- une chambre à compression (12 ou 112) de la section longitudinale qui se rétrécit graduellement, aboutissant à la fin de la structure (1), en face des moyens de poussée, à une ouverture dont la coupe transversale est plus petite que la coupe transversale de la structure creuse (1), par où les peaux des raisins pressés sont ejectées, renfermées et maintenues, sur le haut, par une superficie (15 ou 115) subissant l'action des moyens servant à appliquer une pression prédéterminée à la masse de peaux, et au dessous, par un déflecteur pérméable plat (17) permettant le passage du jus, c aractérisé par le fait que le déflecteur au fond de la chambre de compression est formée comme une branche d'une bande roulante (112), consistant en un matériel perméable et flexible, soutenu par une charpente (125, 128), et enroulé autour de au moins deux rouleaux finaux (123, 124) dont un au moins est à moteur.
- une zone de dimension considérable (125) située sous les branches supérieures et inférieures de la bande de filtration en boucle (122), et moyens par lesquels le jus passant dans cette zone (18) par le fond mobile de la chambre à compression est dirigé en dehors de l'appareil; la masse de raisins pressés introduite à travers la trémie est poussée en avant par intermittence par le pilon à mouvement alternatif (6) afin de recouvrir une suite de zones de la chambre à compression (12 ou 112), le volume des premiers décroissant progressivement; le jus extrait des peaux (qui progressent continuellement sur la bande roulante (122)) sans interruption est filtré par la bande même et recueilli dans cette zone (125).

2. Un appareil, comme au n^{o}1, où la chambre d'arrivée (9) et la chambre à compression (12 ou 112) sont connectées entre elles par une chambre (10) servant à recueillir l'expansion de la masse de peaux après la pression excercée par le mouvement du pilon (6).

3. Un appareil, comme au n^{o}2, où la chambre d'expansion (10) présente des projections (11) provenant des parois de la structure creuse (1), et dont l'importance croît le long de la direction d'alimentation de l'appareil, servant à empêcher le retour de la masse de peaux.

4. Un appareil, comme au n^{o}1, où les moyens de poussée (4) comprennent un cylindre à propulsion liquide (5).

5. Un appareil, comme au n^{o}1, où le passage dans la trémie est bloqué complètement par le pilon (6) en extension.

6. Un appareil, comme au n^{o}1, où le passage dans la trémie est partiellement bloqué par le pilon (6) en extension.

7. Un appareil, comme au n^{o}1, où une couche ou feuille adhesive de matière flexible (elle n'est pas représentée dans les schémas) est située entre la masse de peaux de raisin et la surface supérieure (15 ou 115) de la chambre de compression (12 ou 112), servant à limiter la friction et ainsi à empêcher l'usure de la surface supérieure causée par les peaux en progression.

8. Un appareil, comme au n^{o} 1, où la partie su perieure de la chambre à compression (12) est un panneau rigide en biais (15), servant à appliquer une pression prédéterminée su la masse de peaux avançant longitudinalement à travers la structure creuse (1).
Un ou plusieurs cylindres à propulsion liquide (16 a, b, c).

9. Un appareil, comme au n^{o}8, où la pression exercée par les cylindres à propulsion liquide (16 a, b, c) à travers le panneau rigide en biais (15) sur la masse de peaux se trouvant dans la chambre à compression (12) est uniforme et constante sur toute la surface du panneau.

10. Un appareil, comme au n^{o}1, où la surface supérieure de la chambre à compression coincide avec la surface inférieure en biais d'un seul coussinet gonflable fixé par le haut à la chambre à compression.

11. Un appareil, comme au n^{o}1, où la surface supérieure (115) de la chambre à compression (112) est composée d'un ensemble de différents éléments gonflables de façon indépendante (120a, b, c, d, e,...n) disposés successivement à l'intérieur de la structure creuse (1), chacun possédant une zone de coupe transversale plus importante que l'élément précédant, et moyens d'application d'une pression prédéterminée à la masse de peaux qui consistent en des fluides sous pression fournis à chaque élément gonflable.

12. Un appareil, comme au n^{o}11, où la pression appliquée à la masse de peaux par les éléments gonflables est uniforme et constante.

13. Un appareil, comme au n^{o}11, où la pression appliquée à la masse de peaux par les éléments gonflables peut varier d'élément en élément, tout en demeurant constante.

14. Un appareil, comme au n^{o}1, où le mouvement progressif de la bande de filtration (122) est synchronisé avec le mouvement d'extension du pilon (6).

15. Un appareil, comme au n^{o}14, où le mouvement progressif de la bande de filtration (122) est synchronisé avec le mouvement d'extension du pilon (6) et disposé afin de coincider avec la longueur axiale de la chambre à compression.

16. Un appareil, comme au n^{o}1, comprenant des moyens ultérieurs pour désincruster et gratter la bande de filtration roulante (122), installé très près d'un des rouleaux (123, 124).

17. Un appareil, comme au n^{o}1, comprenant des moyens ultérieurs permettant de laver la surface de la branche de la bande de filtration en boucle (122) qui se trouve en face de la branche coincidant avec la partie inférieure de la chambre à compression (112).

18. Un appareil, comme au n^{o}1, où la bande de filtration roulante (122) consiste en une plaque à plusieurs couches de matériaux différents associés afin d'obtenir la perméabilité requise.

19. Un appareil, comme au n^{o}18, où les couches de matériel filtrant sont composées de mailles, de filets de filtration et de matériaux de criblage.
